# EUROPÄISCHE PATENTSCHRIFT

(11) **EP 4 680 584 B1**
(45) Veröffentlichungstag und Bekanntmachung des Hinweises auf die Patenterteilung: **17.06.2026**
(21) Anmeldenummer: 24709454.3
(22) Anmeldetag: 11.03.2024
(51) Int. Cl.: C04B 20/02

(54) **MECHANO-CHEMISCHE AKTIVIERUNG VON TONEN**
MECHANOCHEMICAL ACTIVATION OF CLAYS
ACTIVATION MÉCANOCHIMIQUE D'ARGILES

(30) Priorität: 13.03.2023 DE 102023106217; 13.03.2023 LU 503625
(43) Veröffentlichungstag der Anmeldung: 21.01.2026
(73) Patentinhaber: thyssenkrupp Polysius GmbH, 59269 Beckum (DE); thyssenkrupp AG, 45143 Essen (DE); SCHWENK Zement GmbH & Co. KG, 89077 Ulm (DE); Celitement GmbH & Co. KG, 76344 Eggenstein-Leopoldshafen (DE)
(72) Erfinder: WILCZEK, Michael, 48231 Warendorf (DE); MAIER, Oliver, 48167 Münster (DE); LAMPE, Karl, 59320 Ennigerloh (DE); SACHSE, Carsten, 48147 Münster (DE); STROTMANN, Jan, 48653 Coesfeld (DE); WILLMS, Eike, 44309 Dortmund (DE); RUDOWSKI, Luc, 13100 Aix en Provence (FR); MÖLLER, Hendrik, 89604 Allmendingen (DE); HAMM, Andreas, 89275 Elchingen (DE); HINDER, Daniel, 76344 Eggenstein-Leopoldshafen (DE); FYLAK, Marc, 90530 Wendelstein (DE); NEUMANN, Thomas, 97753 Karlstadt (DE)
(74) Vertreter: Tetzner, Michael
(86) Internationale Anmeldenummer: PCT/EP2024/056408
(87) Internationale Veröffentlichungsnummer: WO 2024/188958

(56) Entgegenhaltungen:
- EP-A1- 1 880 767
- CN-A- 109 954 485
- US-B2- 8 783 589
- TOLE ILDA ET AL: "Mechanochemical activation of natural clay minerals: an alternative to produce sustainable cementitious binders - review", MINERALOGY AND PETROLOGY SPRINGER VIENNA, VIENNA, vol. 113, no. 4, 8 May 2019 (2019-05-08), pages 449 - 462, XP036833323, ISSN: 0930-0708, [retrieved on 20190508], DOI: 10.1007/S00710-019-00666-Y
- SIMON BLOTEVOGEL: "Ability of the R3 test to evaluate differences in early age reactivity of 16 industrial ground granulated blast furnace slags (GGBS)", CEMENT AND CONCRETE RESEARCH., vol. 130, 1 April 2020 (2020-04-01), US, pages 105998, XP93161349, ISSN: 0008-8846, Retrieved from the Internet <URL:https://www.sciencedirect.com/science/article/pii/S0008884619311421/pdfft?md5=d44e758bb1164f2d480c3a3ede769488&pid=1-s2.0-S0008884619311421-main.pdf> [retrieved on 20240513], DOI: 10.1016/j.cemconres.2020.105998

## Beschreibung

Die Erfindung betrifft ein Verfahren zur mechano-chemischen Aktivierung von Tonen.

Insbesondere im Bereich der Zementindustrie haben sich aktivierte Tone als Zusatzstoff etabliert. Der derzeit übliche Weg ist die Trocknung und Calcinierung der Tone, also eine thermische Aktivierung. Dies erfordert einen 2-stufigen Prozess:
1) Vortrocknung und Amorphisierung der Tonmineralen durch thermische Aktivierung (Kalzinierung)
2) Feinmahlung zur Erzeugung möglichst hoher spezifischer Oberfläche, um das Endprodukt als Zementbestandteil einsetzen zu können.

Ziel der thermischen Aktivierung ist es, die kristalline Struktur der Tonmineralen zu zerstören und in eine amorphe Struktur umzuwandeln, damit die einzelnen chemischen Komponenten wie Aluminiumoxid und Kieselsäure bei der Hydratation des Zements chemisch mit dem gemahlenen Klinker reagieren können. Ziel des zweiten Schritts ist die Erhöhung der Oberfläche durch Mahlen, um die Oberfläche der thermisch aktivierten Tone zu vergrößern und letztendlich die Kinetik der Zementhydratations-reaktion zu erhöhen.

Der neue Prozess der mechano-chemischen Aktivierung kombiniert die beiden Aktivierungsschritte - Amorphisierung und mechanische Aktivierung bzw. Feinmahlung - in einem einstufigen Prozess mit einer Mühle mit hoher Energiedichte, bei der nur mechanische Energie verwendet wird.

Bei der thermischen Aktivierung wird zum einen Energie für die Erwärmung benötigt, zum anderen kann die hohe Temperatur auch weitere Stoffveränderungen bewirken, die gegebenenfalls unerwünscht sind. Ferner erfordert der thermische Prozess eine Rauchgasreinigung zur Abscheidung der entstehenden Stickoxid- und Schwefeloxid-Emissionen. Außerdem erfordert der thermische Prozess künftig den Einsatz von Verfahren zur Abscheidung und gegebenenfalls Reinigung des erzeugten beziehungsweise freigesetzten Kohlendioxids.

Aus der WO 2017 / 008 863 A1 ist ein Verfahren und eine Anlagenanordnung zum Aufbereiten und Aktivieren eines Rohstoffes bekannt.

Aus der EP 3 909 682 A1 ist ein Verfahren und eine Wälzmühle zum thermomechanischen Aktivieren eines Tongemisches bekannt.

Aus der DE 10 2015 106 109 A1 ist ein Verfahren zur tribo-chemischen Aktivierung von Bindemitteln und Zusatzstoffen bekannt.

Aus der US 8 783 589 B2 ist ein Mahlverfahren bekannt.

Aus der CN 109 954 485 A ist ein Verfahren zur Herstellung von aktiviertem Ton bekannt.

Aus der EP 1 880 767 A1 ist ein Verbindungssystem zwischen kontinuierlich betriebenen und in Reihe geschalteten Mühle in einer Mahlvorrichtung bekannt.

Aus der TOLE ILDA ET AL: "Mechanochemical activation of natural clay minerals: an alternative to produce sustainable cementitious binders - review", MINERALOGY AND PETROLOGY, SPRINGER VIENNA, VIENNA, Bd. 113, Nr. 4, 8. Mai 2019 (2019-05-08), Seiten 449-462, XP036833323, ISSN: 0930-0708, DOI: 10.1007/S00710-019-00666-Y [gefunden am 2019-05-08] ist die mechano-chemische Aktivierung von Tonen bekannt.

Da es sich bei Tonen um ein komplexes System handelt (insbesondere im Vergleich zum Brennen von Kalkstein) führen unterschiedliche Aktivierungsverfahren zu unterschiedlichen Produkten (aktivierten Tonen) mit unterschiedlichen Eigenschaften. Während insbesondere Kaolinit durch thermische Aktivierung leicht aktiviert werden kann, können andere Tonminerale wie Muskovit selbst bei hohen Temperaturen nicht oder nur unzureichend thermisch aktiviert werden. Ebenso führt die Unterschiedlichkeit der verwendbaren Tone dazu, dass nicht jedes Verfahren für jeden Ton verwendbar ist.

Aufgabe der Erfindung ist es, ein alternatives Aktivierungsverfahren bereitzustellen, um andere Tonqualitäten einsetzen zu können als sie derzeit als geeignet für eine Kalzinierung von Ton angesehen werden oder andere Produkteigenschaften erzielen zu können. Insbesondere soll eine Erweiterung der möglichen Rohmaterialbasis auf insbesondere muskovitische, illitische oder chloritische Tone möglich sein.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zur mechano-chemischen Aktivierung von mineralischem Material. Das Verfahren weist die folgenden Schritte auf:
a) Trocknen und Grobzerkleinern des mineralischen Materials,
b) Überführen des mineralischen Materials in eine erste Hochenergiemühle,
c) Trockenes Mahlen des mineralischen Materials in der ersten Hochenergiemühle,
d) Entnehmen des mineralischen Materials aus der ersten Hochenergiemühle,
e) Überführen des mineralischen Materials in eine zweite Hochenergiemühle,
f) Mechano-chemisches Aktivieren des mineralischen Materials in der zweiten Hochenergiemühle,
g) Entnehmen des aktivierten mineralischen Materials aus der zweiten Hochenergiemühle, wobei das mechano-chemische Aktivieren in Schritt f) mit einem Energieeintrag pro Mahlraumvolumen von wenigstens 100 kW / m3 durchgeführt wird

In Schritt a) erfolgt zunächst ein erstes Trocknen und Grobzerkleinern. Hierbei kann die Reihenfolge von Trocknen und Grobzerkleinern beliebig sein, diese können auch (partiell) gleichzeitig erfolgen. Dieses ist dem Fachmann aus dem Stand der Technik gut bekannt. Feinstmühlen, also Mühlen, welche eine besonders geringe Partikelgröße erzeugen können, können meist mit zu grobem Material nicht betrieben werden. Zum anderen sind Feinstmühlen auf die Feinstvermahlung optimiert und daher für eine Grobzerkleinerung ungeeignet und unwirtschaftlich. Daher ist es üblich und sinnvoll, eine Grobzerkleinerung vor der Zuführung zu einer Feinstmühle durchzuführen. Des Weiteren ist eine Hauptanwendung die Aktivierung von Tonen, aber auch beispielsweise von auf Halden gelagerten Schlacken. Daher weisen die Edukte meistens eine zu hohe Ausgangsfeuchte auf, sodass eine Trocknung notwendig ist. Beides ist auch vor einer konventionellen thermischen Aktivierung üblich und kann in analoger Weise erfolgen.

Der wesentliche Punkt ist, dass das aktivierte mineralische Material eben direkt der zweiten Hochenergiemühle entnommen wird und sich somit eben nicht erst ein thermischer Aktivierungsschritt anschließt. Die Aktivierung erfolgt also somit bereits vollständig in der zweiten Hochenergiemühle. Die Amorphisierung und mechano-chemische Aktivierung erfolgt also in dem Schritt f) und somit während des Mahlvorgangs.

Die erste Hochenergiemühle in Schritt c) wird somit in der Art betrieben, wie dieses üblich ist. Es wird also das Mahlgut so lange gemahlen (und mit so viel Energie beaufschlagt), um zur minimalen Partikelgröße zu kommen. Es erfolgt also ein reiner klassischer Mahlvorgang. Hierbei erfolgt das Mahlen ohne Wasserzugabe, also nicht nass beziehungsweise in einem Schlamm, sondern entsprechend der Trocknung in Schritt a) als trockenes Vermahlen ohne Feuchtigkeitszugabe, wodurch es sich von den klassischen Nassmahlverfahren unterscheidet. Ebenso erfolgt auch das mechano-chemische Aktivieren in Schritt f) trocken, also ohne Wasserzugabe.

Der Betrieb der zweiten Hochenergiemühle in Schritt f) unterscheidet sich hiervon grundlegend. Hier wird das Mahlgut praktisch mit der geringsten zu erreichenden Partikelgröße der zweiten Hochenergiemühle zugeführt. Die mechano-chemische Aktivierung besteht aus drei Phasen beziehungsweise Stadien: Im ersten Stadium sinkt die Partikelgröße (mehr oder weniger linear) zum Energieeintrag. Vereinfacht ausgedrückt, je mehr man mahlt, um so feiner wird das Produkt. Dieses ist der Betriebsbereich der ersten Hochenergiemühle (Rittinger-Zone). Hierfür gibt es jedoch eine Grenze, eine Partikelgröße, die kaum mehr zu unterschreiten ist. Ab diesem Punkt kommt eine zweite Stufe, bei der sich die Partikelgröße mit weiterem Energieeintrag nicht verändern lässt (Aktivierungs- und Aggregations-Zone). In diesem Stadium kommt es zur Zerstörung von kristallographischen Strukturen durch Lösen von Atombindungen, einzelne Atome oder ganze Gruppen von Atomen werden durch andere Atome oder Gruppen anderer Atom ersetzt. Insbesondere auf den Partikeloberflächen wird die anfängliche Kristallstruktur, sowie Bindungstyp und Oxidationsstufen von Atomen, aufgrund hoher Energieübertragung und nachfolgende chemische Reaktionen, verändert. Aus wirtschaftlichen Gründen vermeidet man daher, bei einer normalen Mahlung, wo nur die Schaffung von Oberfläche erzielt werden soll, den Übergang von der ersten Stufe zur zweiten Stufe. Für die mechano-chemische Aktivierung ist dieser Schritt aber notwendig.. Wird die Energiezufuhr noch weiter erhöht, so kann eine dritte Stufe erreicht werden, bei der aufgrund der Agglomeration von Nanopartikeln sogar wieder ein Anstieg der Partikelgröße feststellbar ist (Agglomerations-Zone), was sich positiv auf die Verarbeitbarkeit in Mörteln und Betonen von Zementen auf Basis aktivierter Tone auswirkt. Dieser Bereich wird bei einer Vermahlung daher noch viel eher vermieden, da mit weniger Aufwand ein besseres Ergebnis zu erzielen ist. Erfindungsgemäß wird aber die zweite Hochenergiemühle gerade ausschließlich in diesem Bereich betrieben, welcher normalerweise ausdrücklich vermeiden wird. Es hat sich gezeigt, dass dadurch eine Aktivierung direkt in der zweiten Hochenergiemühle möglich ist, da bei hohen Energieeinträgen, also in der zweiten Stufe, es zu Veränderungen des Materials selbst kommt, die beispielsweise bei Tonen, ebenso wie eine thermische Aktivierung, zu einer Aktivierung führt, also zu einer Reaktivität, die die Verwendung als Bindemittel (und damit als Klinkerersatz) ermöglicht. Daher kann bei derart hohen Energieeinträgen auf eine anschließende thermische Behandlung verzichtet werden.

Hierbei hat sich jedoch herausgestellt, dass der Energiebedarf für eine reine mechano-chemische Aktivierung höher sein kann, als für eine thermische Aktivierung. Daher erscheint das erfindungsgemäße Verfahren zunächst gegenüber der konventionellen thermischen Aktivierung nachteilig. Es hat sich jedoch gezeigt, dass das erfindungsgemäße Verfahren, trotz des vergleichsweise wahrscheinlich hohen Energiebedarfs vorteilhaft, insbesondere für die Aktivierung von Tonen ist. Gerade bei komplexen Ausgangsstoffen, wie zum Beispiel Tonen kommt es bei einer thermischen Aktivierung regelmäßig zu mehreren negativen Effekten. Zum einen ist bekannt, dass beispielsweise aus Tonen bei erhöhter Temperatur Stoffe gasförmig austreten können, die eine aufwändigere Abgasreinigung erfordern. Durch den Verzicht auf höhere Temperaturen kann dieses vermieden werden. Zum anderen werden bei erhöhter Temperatur der Aktivierung oftmals farbgebende Komponenten, beispielsweise Eisenverbindungen aufoxidiert, was im Falle von hohen Eisengehalten zu einer ungewünschten Rotfärbung des Produkts führt. Um dieses zu vermeiden ist entweder eine Schutzgasatmosphäre oder eine anschießende Reduktion notwendig, was beides aufwändig ist. Somit wird zwar für das erfindungsgemäße Verfahren für den eigentlichen Aktivierungsschritt der Energiebedarf erhöht, es vereinfacht sich aber die Abgasbehandlung und eine anschließende Reduzierung kann vermieden werden. Darüber hinaus wird beim thermischen Aktivierungsprozess immer noch Kohlendioxid freigesetzt, das aus fossilen Brennstoffen oder Abfallbrennstoffen stammt, aber auch aus der Entsäuerung von Karbonatmineralen während des Kalzinierens, was zur Erzielung von CO₂-Neutralität schließlich einen CO₂-Abscheidungsprozess erfordert. Das erfindungsgemäße Verfahren erfordert lediglich elektrische Energie und es wurde gezeigt, dass die Karbonatmineralen im mechano-chemischen Aktivierungsprozess nicht zersetzt werden, sondern als amorphisiertes und reaktives Material im aktivierten Tonprodukt erhalten bleiben. So kann der gesamte Vorgang der Aktivierung zur Herstellung eines marktfähigen Bindemittels effizient vereinfacht und dekarbonisiert werden. Des Weiteren weisen unterschiedliche Tonminerale unterschiedliche optimale thermische Aktivierungstemperaturen auf. So werden beispielsweise Minerale der Kaolin- und der Chloritgruppe bei deutlich niedrigeren Temperaturen aktiviert als zum Beispiel Minerale der Glimmergruppe (Muskovit, Illit und andere) Wählt man bei Tonen, die Minerale dieser Gruppen enthalten, für die thermische Aktivierung die optimale Aktivierungstemperatur von Kaolinit, so werden Minerale wie Muskovit und Illit noch nicht aktiviert. Wählt man hingegen für die thermische Aktvierung die deutlich höhere Aktivierungstemperatur von Muskovit und Illit, so kommt es aufgrund der Bildung neuer Mineralphasen, insbesondere Spinelle, zum Überbrennen des Kaolinit, was eine Deaktivierung zur Folge hat. Diese Differenzierung der Tonminerale bezüglich der optimalen Aktivierungstemperatur entfällt hingegen bei der mechano-chemischen Aktivierung.

Es können hierbei beispielsweise und bevorzugt auch zwei oder mehr zweite Hochenergiemühlen parallel betrieben werden und so eine notwendige längere Verweilzeit in der zweiten Hochenergiemühle kompensiert werden.

Erfindungsgemäß wird das Mahlen in Schritt f) mit einem Energieeintrag pro Mahlraumvolumen von wenigstens 100 kW / m³, bevorzugt von wenigstens 200 kW / m³, durchgeführt. Ein üblicher Wert für eine Kugelmühle als Beispiel einer Feinstmühle liegt üblicherweise eher bei 20 kW / m³ und somit deutlich niedriger. Hierbei ist als das Mahlraumvolumen das im Inneren der zweiten Hochenergiemühle zur Verfügung stehende Volumen zu verstehen, also das freie Volumen, wenn kein Material und beispielsweise auch keine Kugeln in der zweiten Hochenergiemühle sind. Zur Mühle gehörende Bauteile, zum Beispiel eine Welle, die im Inneren beispielsweise beweglich angeordnet ist, zählt somit nicht zum Mahlraumvolumen, da dieses Volumen eben nicht durch Material einnehmbar ist.

In einer weiteren Ausführungsform der Erfindung bewirkt das mechano-chemische Aktivieren des mineralischen Materials in Schritt f) eine Erhöhung des R3-Wertes (7d) nach ASTM C1897-20 um wenigstens 150 J/g, bevorzugt um wenigstens 250 J/g. Die Aktivierung ist somit entsprechend hoch, um die so aktivierten Materialien als Zementersatzstoffe (Supplementary Cementitious Materials, SCM) zu verwenden. Bei dem Standard ASTM C1897-20 handelt es sich um den für die Zementindustrie gebräuchlichen Standard zur Untersuchung der Reaktivität beziehungswiese des Abbindeverhaltens.

In einer weiteren Ausführungsform der Erfindung wird die zweite Hochenergiemühle kontinuierlich betrieben. Dieses bedeutet, dass sowohl gemäß Schritt e) mineralisches Material kontinuierlich in die zweite Hochenergiemühle eingetragen und gleichzeitig kontinuierlich gemäß Schritt g) aktiviertes mineralische Material entnommen wird. Bevorzugt wird die zweite Hochenergiemühle daher als Durchlaufmühle mit einer Eingangsseite und einer Ausgangsseite betrieben.

In einer weiteren Ausführungsform der Erfindung wird zwischen Schritt d) und Schritt e) eine erste größenselektive Trennung in eine erste Grobfraktion und eine erste Feinfraktion durchgeführt. Die erste Feinfraktion wird in Schritt e) überführt und die erste Grobfraktion wird in Schritt b) zurückgeführt. Da die erste Hochenergiemühle in dem reinen Mahlbereich betrieben wird, macht es Sinn, nur die Feinfraktion in die zweite Hochenergiemühle zu überführen und so sicherzustellen, dass in der zweiten Hochenergiemühle eben keine Mahlarbeit mehr verrichtet werden muss und kann.

In einer weiteren Ausführungsform der Erfindung wird die erste größenselektive Trennung derart durchgeführt, dass die Größengrenze zwischen der ersten Grobfraktion und der ersten Feinfraktion der mit der ersten Hochenergiemühle erreichbaren geringsten Partikelgröße mal einem Faktor von 2 entspricht. Je nach Mühle, Mahlkörper und zu mahlendem Material ist die minimal zu erreichende geringste Partikelgröße variabel, aber durch das oben beschriebene Verhältnis zwischen eingebrachter Energie und Partikelgröße eben nicht veränderbar. Wäre also beispielsweise für eine gegebene Kombination die geringste Partikelgröße 5 µm, so würde als Größengrenze 10 µm gewählt werden.

In einer weiteren Ausführungsform der Erfindung wird nach Schritt g) eine zweite größenselektive Trennung in eine zweite Grobfraktion und eine zweite Feinfraktion durchgeführt, wobei die zweite Grobfraktion als Produkt entnommen wird, und die zweite Feinfraktion in Schritt e) zurückgeführt und hier wiederum die zweite Grobfraktion als Produkt entnommen wird. Beispielsweise erfolgt die Trennung mittels eines Sichters. Hierbei wird die zweite Feinfraktion zurückgeführt, da die Aktivierung mit einer Vergrößerung der Partikel verbunden ist. Dieses unterscheidet sich grundlegend von der normalen Trennung und Rückführung bei einer Mühle, bei der die Grobfraktion normalerweise zurückgeführt wird.

In einer weiteren Ausführungsform der Erfindung wird die zweite größenselektive Trennung derart durchgeführt, dass die Partikelgrößengrenze zwischen der zweiten Grobfraktion und der zweiten Feinfraktion der mit der zweiten Hochenergiemühle erreichbaren geringsten Partikelgröße mal einem Faktor von 2 entspricht.

In einer weiteren Ausführungsform der Erfindung sind die erste Hochenergiemühle und die zweite Hochenergiemühle ausgewählt aus der Gruppe umfassend Schwingmühle, Planetenkugelmühle und Rührwerkskugelmühle. Bevorzugt ist die erste Hochenergiemühle und die zweite Hochenergiemühle ausgewählt aus der Gruppe umfassend Planetenkugelmühle und Rührwerkskugelmühle. Diese Mühlentypen haben sich für die mechano-chemische Aktivierung als besonders geeignet herausgestellt, da mit diesen Mühlentypen besonders hohe Energiedichten erreichbar sind. Besonders bevorzugt sind die erste Hochenergiemühle und die zweite Hochenergiemühle eine trocken betriebene Rührwerkskugelmühle.

In einer weiteren Ausführungsform der Erfindung wird als zweite Hochenergiemühle eine trocken betriebene Rührwerkskugelmühle mit einem Länge-zu-Durchmesser-Verhältnis von 2,5 bis 5 ausgewählt.

In einer weiteren Ausführungsform der Erfindung wird die zweite Hochenergiemühle mit einem Mahlkörper-Füllungsgrad von 50 Vol.-% bis 95 Vol.-%, bevorzugt von 50 Vol.-% bis 80 Vol.-%, besonders bevorzugt von 60 Vol.-% bis 70 Vol.-%, gefüllt. Hierbei wird das Schüttvolumen der Mahlkörper auf das Mahlraumvolumen der zweiten Hochenergiemühle bezogen wird. Da bei einer einfachen Schüttung der Füllungsgrad um 64 % und bei einer dichtesten Kugelpackung nur um 74 % liegt, ergibt sich selbst bei einem theoretischen Mahlkörper-Füllungsgrad von 100 % ein entsprechender Freiraum, welcher beispielsweise von dem zu aktivierenden mineralischen Material eingenommen werden kann. Da der Füllungsgrad einer Mahlkörperschüttung aber sehr extrem von der Form und Gleichförmigkeit der Mahlkörper abhängt, ist es praktisch einfacher, hier den Mahlkörper-Füllungsgrad eben auf das Schüttvolumen und nicht auf das eigentliche (gefüllte) Volumen zu beziehen.

In einer weiteren Ausführungsform der Erfindung werden Mahlkörper aus Eisen oder einer Eisenlegierung oder aus Aluminium oder einer Aluminiumlegierung ausgewählt. Bevorzugt werden Mahlkörper aus Eisen oder einer Eisenlegierung ausgewählt. Insbesondere werden Mahlkörper aus Stahl ausgewählt.

In einer weiteren Ausführungsform der Erfindung werden keramische Mahlkörper ausgewählt.

In einer weiteren Ausführungsform der Erfindung werden Mahlkörper mit einem Durchmesser von 1 mm bis 10 mm ausgewählt.

In einer weiteren Ausführungsform der Erfindung wird die Rührwerkskugelmühle mit einer Umfangsgeschwindigkeit von 2 m/s bis 8 m/s, bevorzugt von 3 m/s bis 5 m/s, besonders bevorzugt von 3,5 m/s bis 4,5 m/s, betrieben.

In einer weiteren Ausführungsform der Erfindung wird die Rührwerkskugelmühle mit einem Gasvolumenstrom und einem Materialstrom betrieben. Das Verhältnis von Gasvolumenstrom zu Materialstrom wird derart eingestellt, dass das Verhältnis von Gasvolumenstrom zu Materialstrom zwischen 0,0001 m³/kg und 5 m³/kg, vorzugsweise zwischen 0,1 m³/kg und 2 m³/kg liegt.

In einer weiteren Ausführungsform der Erfindung erfolgt das Trocknen und Zerkleinern in Schritt a) auf eine Restfeuchte kleiner 1 Gew.-% und eine Korngröße kleiner 2 mm.

In einer weiteren Ausführungsform der Erfindung wird das mineralische Material ausgewählt aus der Gruppe umfassend Ton, Asche, insbesondere Flugasche, Belitzementklinker, Altbetonfeinanteile, Schlacke, Schichtsilikate und Gerüstsilikate. Besonders bevorzugt wird als mineralisches Material Ton oder eine Mischung aus Ton und einem weiteren Material oder mehreren weiteren Materialien ausgewählt aus der Gruppe umfassend Asche, insbesondere Flugasche, Belitzementklinker, Altbetonfeinanteile, Schlacke, Schichtsilikate und Gerüstsilikate.

In einer weiteren Ausführungsform der Erfindung wird das mineralische Material zusammen mit 0,1-50 Gew.-% Quarz oder Korund mechanisch aktiviert.

In einer weiteren Ausführungsform der Erfindung wird nach dem Entnehmen des aktivierten mineralischen Materials in Schritt g) das entnommene Material zur Ermittlung der Aktivierung untersucht. Zur Untersuchung wird oder werden ein Verfahren oder mehrere Verfahren ausgewählt aus der Gruppe umfassend IR-Spektroskopie, RAMAN-Spektroskopie, Röntgenbeugungsanalyse, Wärmeflusskalorimetrie, Thermogravimetrie, Rasterelektronenmikroskopie, Partikelgrößen- und/oder Partikelformanalyse, NMR-Spektroskopie. Besonders bevorzugt wird zur Untersuchung ein Verfahren oder mehrere Verfahren ausgewählt aus der Gruppe umfassend IR-Spektroskopie, RAMAN-Spektroskopie, Röntgenbeugungsanalyse, Wärmeflusskalorimetrie.

In einer weiteren Ausführungsform der Erfindung wird als Gas für den Gasstrom durch die erste Hochenergiemühle und/oder die zweite Hochenergiemühle ein Gas ausgewählt und verwendet, welches ein Gas oder mehrere Gase aufweist, das ausgewählt ist aus der Gruppe umfassend Stickstoff, Argon, Kohlendioxid, Wasserdampf, Kohlenmonoxid, Wasserstoff, Kohlenwasserstoff, insbesondere Methan, Ethan, Propan und Butan. Besonders bevorzugt weist das Gas hauptsächlich (mehr als 50 Vol.-%) Stickstoff, Kohlendioxid oder Wasserdampf auf. Besonders bevorzugt weist das Gas weniger als 1 Vol.-%, bevorzugt weniger als 0,1 Vol.-%, Sauerstoff auf.

In einer weiteren Ausführungsform der Erfindung wird das mineralische Material in Schritt c) und/oder Schritt f) mit einem flüssigen oder festen Reduktionsmittel vermahlen. Beispielsweise kann Kohle beziehungsweise Kohlenstaub als festes Reduktionsmittel verwendet werden. Beispielsweise kann ein flüssiger Kohlenwasserstoff als flüssiges Reduktionsmittel verwendet werden. Die Zugabe dient beispielsweise zum einen dazu, eine Oxidation, beispielsweise von Eisen, zu verhindern. Gleichzeitig kann dieses genutzt werden, um einen gewünschten neutralen Grauton des fertigen Produkts einzustellen.

In einer weiteren Ausführungsform der Erfindung erfolgt das Mahlen in Schritt c) und/oder Schritt f) bei 100 °C bis 250 °C Materialtemperatur. Diese erhöhte Temperatur ist vorteilhaft, um eine Kondensation von Wasser zu vermeiden und gegebenenfalls weiteres Wasser austragen zu können.

Nachfolgend ist das erfindungsgemäße Verfahren anhand eines in der Zeichnung dargestellten Ausführungsbeispiels näher erläutert.

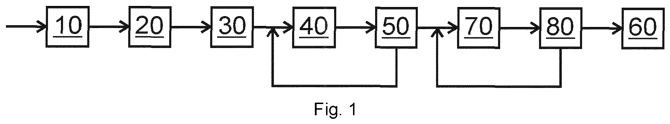

- Fig. 1: Ablaufdiagramm

In Fig. 1 ist das Verfahren stark schematisch dargestellt. Beispielsweise wird ein Ton in die Hammermühle 10 eingebracht, dort zerkleinert und über einen Steigrohrtrockner 20 in ein Eduktsilo 30 gefördert. Der so vorzerkleinerte und getrocknete Ton wird in eine erste Hochenergiemühle 40 (beispielsweise eine Rührwerkskugelmühle) überführt. Das aus der ersten Hochenergiemühle 40 entnommene Material wird in einer ersten Trennvorrichtung 50, beispielsweise einem Sichter, getrennt. Die erste Grobfraktion wird hierbei in die erste Hochenergiemühle 40 zurückgeführt und somit weiter zerkleinert. Die erste Feinfraktion wird in die zweite Hochenergiemühle 70, beispielsweise eine Rührwerkskugelmühle mit Mahlkörper-Füllungsgrad von 65 %, überführt, wobei als Mahlkörper Stahl-Kugeln mit einem Durchmesser von 4 mm verwendet werden. Der Energieeintrag beträgt 350 kW / m³. Die Rührwerkskugelmühle hat ein Länge-zu Durchmesser-Verhältnis von 4 und wird mit einer Umfangsgeschwindigkeit von 4 m/s betrieben. Das Verhältnis von Gasvolumenstrom zu Materialstrom beträgt 0,01 m³/kg. Das aus der zweiten Hochenergiemühle 70 entnommene Material wird in einer zweiten Trennvorrichtung 80, beispielsweise einem Sichter, getrennt. Die zweite Feinfraktion wird hierbei in die zweite Hochenergiemühle 70 zurückgeführt und somit weiter aktiviert. Die zweite Grobfraktion wird als aktiviertes Material in ein Produktsilo 60 überführt.

### Bezugszeichen

- 10: Hammermühle
- 20: Steigrohrtrockner
- 30: Eduktsilo
- 40: erste Hochenergiemühle
- 50: erste Trennvorrichtung
- 60: Produktsilo
- 70: zweite Hochenergiemühle
- 80: zweite Trennvorrichtung

## Patentansprüche

1. Verfahren zur mechano-chemischen Aktivierung von mineralischem Material, wobei das Verfahren die folgenden Schritte aufweist:
a) Trocknen und Grobzerkleinern des mineralischen Materials,
b) Überführen des mineralischen Materials in einer ersten Hochenergiemühle (40),
c) Trockenes Mahlen des mineralischen Materials in der ersten Hochenergiemühle (40),
d) Entnehmen des mineralischen Materials aus der ersten Hochenergiemühle (40),
e) Überführen des mineralischen Materials in eine zweite Hochenergiemühle (70),
f) Mechano-chemisches Aktivieren des mineralischen Materials in der zweiten Hochenergiemühle (70),
g) Entnehmen des aktivierten mineralischen Materials aus der zweiten Hochenergiemühle (70),
wobei das mechano-chemische Aktivieren in Schritt f) mit einem Energieeintrag pro Mahlraumvolumen von wenigstens 100 kW / m³ durchgeführt wird.

2. Verfahren nach Anspruch 1, **dadurch gekennzeichnet, dass** das mechano-chemische Aktivieren in Schritt f) mit einem Energieeintrag pro Mahlraumvolumen von wenigstens 200 kW / m³ durchgeführt wird.

3. Verfahren nach einem der vorstehenden Ansprüche, **dadurch gekennzeichnet, dass** das mechano-chemische Aktivieren des mineralischen Materials in Schritt f) eine Erhöhung des R3-Wertes (7d) nach ASTM C1897-20 um wenigstens 150 J/g, bevorzugt um wenigstens 250 J/g, bewirkt.

4. Verfahren nach einem der vorstehenden Ansprüche, **dadurch gekennzeichnet, dass** die zweite Hochenergiemühle (70) kontinuierlich betrieben wird.

5. Verfahren nach einem der vorstehenden Ansprüche, **dadurch gekennzeichnet, dass** zwischen Schritt d) und Schritt e) eine erste größenselektive Trennung in eine erste Grobfraktion und eine erste Feinfraktion durchgeführt wird, wobei die erste Feinfraktion in Schritt e) überführt wird, wobei die erste Grobfraktion in Schritt b) überführt wird.

6. Verfahren nach Anspruch 5, **dadurch gekennzeichnet, dass** die erste größenselektive Trennung derart durchgeführt wird, dass die Größengrenze zwischen der ersten Grobfraktion und der ersten Feinfraktion der mit der ersten Hochenergiemühle (40) erreichbaren geringsten Partikelgröße mal einem Faktor von 2 entspricht.

7. Verfahren nach einem der vorstehenden Ansprüche, **dadurch gekennzeichnet, dass** nach Schritt g) eine zweite größenselektive Trennung in eine zweite Grobfraktion und eine zweite Feinfraktion durchgeführt wird, wobei die zweite Grobfraktion als Produkt entnommen wird, wobei die zweite Feinfraktion in Schritt e) überführt wird.

8. Verfahren nach Anspruch 7, **dadurch gekennzeichnet, dass** die zweite größenselektive Trennung derart durchgeführt wird, dass die Größengrenze zwischen der zweiten Grobfraktion und der zweiten Feinfraktion der mit der zweiten Hochenergiemühle (70) erreichbaren geringsten Partikelgröße mal einem Faktor von 2 entspricht.

9. Verfahren nach einem der vorstehenden Ansprüche, **dadurch gekennzeichnet, dass** die erste Hochenergiemühle (40) und die zweite Hochenergiemühle (70) ausgewählt sind aus der Gruppe umfassend Schwingmühle, Planetenkugelmühle und Rührwerkskugelmühle.

10. Verfahren nach einem der vorstehenden Ansprüche, **dadurch gekennzeichnet, dass** als zweite Hochenergiemühle (70) eine Rührwerkskugelmühle mit einem Länge-zu-Durchmesser-Verhältnis von 2,5 bis 5 ausgewählt wird.

11. Verfahren nach einem der vorstehenden Ansprüche, **dadurch gekennzeichnet, dass** die zweite Hochenergiemühle (70) mit einem Mahlkörper-Füllungsgrad von 50 Vol.-% bis 95 Vol.-%, bevorzugt von 60 Vol.-% bis 70 Vol.-%, gefüllt wird, wobei das Schüttvolumen der Mahlkörper auf das Mahlraumvolumen der zweiten Hochenergiemühle (70) bezogen wird.

12. Verfahren nach einem der vorstehenden Ansprüche, **dadurch gekennzeichnet, dass** nach dem Entnehmen des aktivierten mineralischen Materials in Schritt g) das entnommene Material zur Ermittlung der Aktivierung untersucht wird, wobei zur Untersuchung ein Verfahren oder mehrere Verfahren ausgewählt werden aus der Gruppe umfassend IR-Spektroskopie, RAMAN-Spektroskopie, Röntgenbeugungsanalyse, Wärmeflusskalorimetrie, Thermogravimetrie, Rasterelektronenmikroskopie, Partikelgrößen- und/oder Partikelformanalyse, NMR-Spektroskopie.

13. Verfahren nach einem der vorstehenden Ansprüche, **dadurch gekennzeichnet, dass** als Gas ein Gas ausgewählt und verwendet wird, welches ein Gas oder mehrere Gase, ausgewählt ist aus der Gruppe umfassend Stickstoff, Argon, Kohlendioxid, Wasserdampf, Kohlenmonoxid, Wasserstoff, Kohlenwasserstoff, insbesondere Methan, Ethan, Propan und Butan.

14. Verfahren nach einem der vorstehenden Ansprüche, **dadurch gekennzeichnet, dass** das mineralischen Material in Schritt c) und/oder in Schritt f) mit einem flüssigen oder festen Reduktionsmittel vermahlen und mechanisch aktiviert wird.

15. Verfahren nach einem der vorstehenden Ansprüche, **dadurch gekennzeichnet, dass** das Mahlen in Schritt c) und/oder das mechano-chemische Aktivieren in Schritt f) bei 100 °C bis 200 °C erfolgt.

## Claims

1. Method for the mechanochemical activation of mineral material, wherein the method comprises the following steps:
a) drying and coarse crushing of the mineral material,
b) transfer of the mineral material into a first high-energy mill (40),
c) dry milling of the mineral material in the first high-energy mill (40),
d) removal of the mineral material from the first high-energy mill (40),
e) transfer of the mineral material into a second high-energy mill (70),
f) mechanochemical activation of the mineral material in the second high-energy mill (70),
g) removal of the activated mineral material from the second high-energy mill (70),
wherein the mechanochemical activation in step f) is carried out with an energy input per milling chamber volume of at least 100 kW/m³.

2. Method according to claim 1, **characterised in that** the mechanochemical activation in step f) is carried out with an energy input per milling chamber volume of at least 200 kW/m³.

3. Method according to any of the preceding claims, **characterised in that** the mechanochemical activation of the mineral material in step f) causes an increase in the R3 value (7d) according to ASTM C1897-20 by at least 150 J/g, preferably by at least 250 J/g.

4. Method according to any of the preceding claims, **characterised in that** the second high-energy mill (70) is operated continuously.

5. Method according to any of the preceding claims, **characterised in that** between step d) and step e), a first size-selective separation into a first coarse fraction and a first fine fraction is carried out, wherein the first fine fraction is transferred to step e), wherein the first coarse fraction is transferred to step b).

6. Method according to claim 5, **characterised in that** the first size-selective separation is carried out such that the size limit between the first coarse fraction and the first fine fraction corresponds to the smallest particle size achievable with the first high-energy mill (40) times a factor of 2.

7. Method according to any of the preceding claims, **characterised in that** after step g), a second size-selective separation into a second coarse fraction and a second fine fraction is carried out, wherein the second coarse fraction is removed as a product, wherein the second fine fraction is transferred to step e).

8. Method according to claim 7, **characterised in that** the second size-selective separation is carried out such that the size limit between the second coarse fraction and the second fine fraction corresponds to the smallest particle size achievable with the second high-energy mill (70) times a factor of 2.

9. Method according to any of the preceding claims, **characterised in that** the first high-energy mill (40) and the second high-energy mill (70) are selected from the group comprising vibration mill, planetary ball mill and attritor.

10. Method according to any of the preceding claims, **characterised in that** an attritor with a length-to-diameter ratio of 2.5 to 5 is selected as the second high-energy mill (70).

11. Method according to any of the preceding claims, **characterised in that** the second high-energy mill (70) is filled with a milling medium filling level of 50 vol.% to 95 vol.%, preferably of 60 vol.% to 70 vol.%, wherein the bulk volume of the milling medium is relative to the milling chamber volume of the second high-energy mill (70).

12. Method according to any of the preceding claims, **characterised in that** after the removal of the activated mineral material in step g), the removed material is examined to determine the activation, wherein one or more methods are selected from the group comprising IR spectroscopy, RAMAN spectroscopy, X-ray diffraction analysis, heat flow calorimetry, thermogravimetry, scanning electron microscopy, particle size and/or particle shape analysis, NMR spectroscopy for the examination.

13. Method according to any of the preceding claims, **characterised in that** a gas is selected and used as the gas, which is one or more gases selected from the group comprising nitrogen, argon, carbon dioxide, water vapour, carbon monoxide, hydrogen, hydrocarbon, in particular methane, ethane, propane and butane.

14. Method according to any of the preceding claims, **characterised in that** in step c) and/or in step f), the mineral material is milled with a liquid or solid reducing agent and mechanically activated.

15. Method according to any of the preceding claims, **characterised in that** the milling in step c) and/or the mechanochemical activation in step f) takes place at 100°C to 200°C.

## Revendications

1. Procédé d'activation mécanochimique de matériau minéral, ledit procédé comportant les étapes suivantes :
a) séchage et concassage grossier du matériau minéral,
b) transfert du matériau minéral dans un premier broyeur à haute énergie (40),
c) broyage à sec du matériau minéral dans le premier broyeur à haute énergie (40),
d) retrait du matériau minéral du premier broyeur à haute énergie (40),
e) transfert du matériau minéral dans un second broyeur à haute énergie (70),
f) activation mécanochimique du matériau minéral dans le second broyeur à haute énergie (70),
g) retrait du matériau minéral activé du second broyeur à haute énergie (70),
dans lequel l'activation mécanochimique à l'étape f) est effectuée avec un apport d'énergie par volume de chambre de broyage d'au moins 100 kW/m³.

2. Procédé selon la revendication 1, **caractérisé en ce que** l'activation mécanochimique à l'étape f) est effectuée avec un apport d'énergie par volume de chambre de broyage d'au moins 200 kW/m³.

3. Procédé selon l'une quelconque des revendications précédentes, **caractérisé en ce que** l'activation mécanochimique du matériau minéral à l'étape f) entraîne une augmentation de la valeur R3 (7 jours) selon ASTM C1897-20 d'au moins 150 J/g, de préférence d'au moins 250 J/g.

4. Procédé selon l'une quelconque des revendications précédentes, **caractérisé en ce que** le second broyeur à haute énergie (70) fonctionne en continu.

5. Procédé selon l'une quelconque des revendications précédentes, **caractérisé en ce qu'**entre l'étape d) et l'étape e), une première séparation granulométrique en une première fraction grossière et une première fraction fine est effectuée, la première fraction fine étant transférée à l'étape e) et la première fraction grossière étant transférée à l'étape b).

6. Procédé selon la revendication 5, **caractérisé en ce que** la première séparation granulométrique est effectuée de sorte que la limite de taille entre la première fraction grossière et la première fraction fine correspond à la plus petite taille de particules atteignable avec le premier broyeur à haute énergie (40) multipliée par un facteur de 2.

7. Procédé selon l'une quelconque des revendications précédentes, **caractérisé en ce qu'**après l'étape g), une seconde séparation granulométrique en une seconde fraction grossière et une seconde fraction fine est effectuée, la seconde fraction grossière étant retirée en tant que produit et la seconde fraction fine étant transférée à l'étape e).

8. Procédé selon la revendication 7, **caractérisé en ce que** la seconde séparation granulométrique est effectuée de sorte que la limite de taille entre la seconde fraction grossière et la seconde fraction fine correspond à la plus petite taille de particules atteignable avec le second broyeur à haute énergie (70) multipliée par un facteur de 2.

9. Procédé selon l'une quelconque des revendications précédentes, **caractérisé en ce que** le premier broyeur à haute énergie (40) et le second broyeur à haute énergie (70) sont choisis dans le groupe comprenant un broyeur vibrant, un broyeur planétaire à billes et un broyeur à billes à agitateur.

10. Procédé selon l'une quelconque des revendications précédentes, **caractérisé en ce qu'un** broyeur à billes à agitateur présentant un rapport longueur/diamètre de 2,5 à 5 est choisi comme second broyeur à haute énergie (70).

11. Procédé selon l'une quelconque des revendications précédentes, **caractérisé en ce que** le second broyeur à haute énergie (70) est rempli avec un taux de remplissage en corps broyants de 50 % en volume à 95 % en volume, de préférence de 60 % en volume à 70 % en volume, le volume en vrac des corps broyants étant rapporté au volume de la chambre de broyage du second broyeur à haute énergie (70).

12. Procédé selon l'une quelconque des revendications précédentes, **caractérisé en ce qu'**après le retrait du matériau minéral activé à l'étape g), le matériau retiré est analysé pour la détermination de l'activation, ladite analyse utilisant un ou plusieurs procédés choisis dans le groupe comprenant la spectroscopie IR, la spectroscopie Raman, l'analyse par diffraction des rayons X, la calorimétrie à flux thermique, la thermogravimétrie, la microscopie électronique à balayage, l'analyse de la taille et/ou de la forme des particules et la spectroscopie RMN.

13. Procédé selon l'une quelconque des revendications précédentes, **caractérisé en ce qu'**est choisi et utilisé comme gaz un gaz constitué d'un ou de plusieurs gaz choisis dans le groupe comprenant l'azote, l'argon, le dioxyde de carbone, la vapeur d'eau, le monoxyde de carbone, l'hydrogène, les hydrocarbures, en particulier le méthane, l'éthane, le propane et le butane.

14. Procédé selon l'une quelconque des revendications précédentes, **caractérisé en ce que** le matériau minéral est broyé et activé mécaniquement à l'étape c) et/ou à l'étape f) avec un agent réducteur liquide ou solide.

15. Procédé selon l'une quelconque des revendications précédentes, **caractérisé en ce que** le broyage à l'étape c) et/ou l'activation mécanochimique à l'étape f) s'effectuent à une température de 100 °C à 200 °C.
